# EUROPEAN PATENT APPLICATION

(11) **EP 1 260 922 A1**
(43) Date of publication of application: **27.11.2002**
(21) Application number: 01902826.5
(22) Date of filing: 09.02.2001
(51) Int. Cl.: G06F 17/60

(54) **SALE MANAGING METHOD, SALE MANAGING SYSTEM, AND COMMODITY SELLING SYSTEM**

(30) Priority: 09.02.2000 JP 2000032195
(71) Applicant: Sony Computer Entertainment Inc., Tokyo 107-0052 (JP)
(72) Inventor: KUTARAGI, Ken c/o Sony Computer Entertainment Inc., Minato-ku, Tokyo 107-0052 (JP); SAITO, Akira c/o Sony Computer Entertainment Inc., Minato-ku, Tokyo 107-0052 (JP); WAKIMOTO, T. c/o Sony Computer Entertainment Inc., Minato-ku, Tokyo 107-0052 (JP); KUWAHARA, Toru c/o Sony Computer Entertainment Inc, Minato-ku, Tokyo 107-0052 (JP); TAMURA, Kazuya c/o Sony Computer Entertainment Inc, Minato-ku, Tokyo 107-0052 (JP); HIRANO, Hajime c/o Sony Computer Entertainment Inc, Minato-ku, Tokyo 107-0052 (JP)
(74) Representative: DeVile, Jonathan Mark, Dr.
(86) International application number: JP0100933
(87) International publication number: WO01059641

(57) **Abstract**

A stock number situation based on the stock number of articles owned by a retail shop 20 and the stock number of articles owned by a wholesale house is set, and information corresponding to the order content and the stock number situation is displayed on a terminal 11 of an order source 10. The article allocation processing to the order accepted is carried out by investigating the stock number of articles owned by the retail shop and allocating the articles in stock if it is possible to allocate the articles in stock, or requesting the allocation to the wholesale house if it is impossible to allocate the articles in stock. Accordingly, the stock risk of the retail shop can be reduced, and the loss of sale opportunities due to out of stock can be reduced.

## Description

### TECHNICAL FIELD

The present invention relates to a sales managing method and a sales managing system when dealings of articles are carried out through a network, and particularly to a technique for managing the stock of articles and allocating articles.

### BACKGROUND ART

In order to sell articles to consumers, each retail shop gets the articles through a wholesale house or the like in advance, lays the articles in stock and manages the articles as assets thereof. When inquiries about orders of articles are made from consumers, the articles are allocated to the consumers if they are laid in stock, or information indicating "out of stock" or the like is notified to the consumers if no articles are laid in stock.

If the number of pieces of some article ordered by consumers (hereinafter referred to as "order number") is smaller than the number of pieces of the article laid in stock at the retail shop side, the article is left as unsold articles in stock and thus the retail shop suffers economical losses. Accordingly, in order to avoid such a risk due to unsold articles in stock, it is preferable to reduce the stock of the article. On the other hand, if the number of pieces of some article laid in stock is smaller than the number of orders from consumers, the retail shop loses selling opportunities and this is unfavorable.

### DISCLOSURE OF THE INVENTION

Therefore, an object of the present invention is to provide a sales managing technique which reduces a risk due to unsold articles in stock at a retail shop side, and also avoids losing selling opportunities due to out of stock.

In order to attain the above object, a sales managing method for a seller who accepts an on-line order from a terminal of a purchaser comprises the steps of: obtaining the number of articles in stock which are owned by an article supply source for supplying the articles to the seller; and determining the stock number situation of articles calculated on the basis of the stock number of articles owned by the seller and the stock number of articles owned by the article supply source, wherein when an order request containing information for specifying the kind of articles (i.e., the name of an article or the like) and the number of articles ordered is accepted from the terminal of the purchaser, the in formation based on the number of the articles ordered which are specified in the order request and the stock number situation of the specified articles in stock is displayed on the terminal of the purchaser.

### BRIEF DESCRIPTION OF THE DRAWINGS

Fig. 1 is a block diagram showing the construction of a network according to a first embodiment of the present invention;
Fig. 2 is a block diagram showing the construction of a hardware of a computer of a user;
Fig. 3 is a block diagram showing the construction of a hardware of a server computer of a retail shop;
Fig. 4 is a block diagram showing the construction of a hardware of a server computer of a wholesale house;
Fig. 5 is a flowchart of a stock number management according to the first embodiment of the present invention;
Fig. 6 is a diagram showing a home page representing a virtual shop;
Fig. 7 is a diagram showing a member authentication home page;
Fig. 8 is a diagram showing an article list page;
Fig. 9 is a diagram showing a list page of articles to be purchased;
Fig. 10 is a diagram showing a purchase proceeding page;
Fig. 11 is a diagram showing an input page of payment manner;
Fig. 12 is a diagram showing an order-accepting page;
Fig. 13 is a diagram showing an order-accepting page;
Fig. 14 is a diagram showing an order-accepting page;
Fig. 15 is a conceptual diagram showing an accepted order list structure;
Fig. 16 is a flowchart showing an article allocation based on the present invention;
Fig. 17 is a block diagram showing the construction of a network according to a second embodiment of the present invention;
Fig. 18 is a flowchart showing a stock management according to the second embodiment of the present invention; and
Fig. 19 is a flowchart showing a stock management according to a modification of the first embodiment of the present invention.

### DETAILED DESCRIPTION OF THE PREFERRED EMBODIMENTS

Preferred embodiments according to the present invention will be described hereunder in detail with reference to the accompanying drawings. In the following embodiments, the present invention is applied to a retail shop which accepts an order of articles on a Web page. The articles dealt by the retail shop are gotten from a wholesale house and then sold on the Web page provided by the retail shop. It is needless to say that the present invention is not limited to the article dealings on the Web pages, and it may be applied to other on-line dealings.

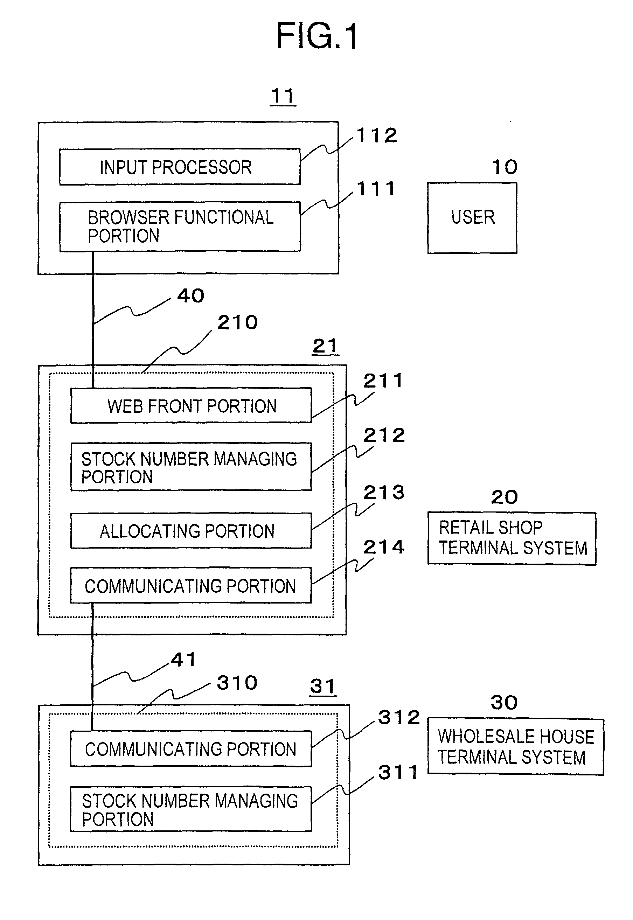

Fig. 1 is a block diagram showing the construction of a network to which a sales managing system according to a first embodiment of the present invention is applied. Aretail shop terminal system (hereinafter merely referred to as "retail shop") 20 manages the stock situation of articles (goods) on the basis of the retail stock owned by the retail shop itself and the wholesale stock owned by a wholesale house terminal system (hereinafter merely referred to as "wholesale house") 30. When accepting an order of some article from a user 10 on its Web page, the retail shop 20 transmits a message in accordance with the stock situation to the user 10.

Allocation processing of the article corresponding to the order accepted on the Web page is carried out separately from the ordering processing. The number of pieces of the article thus allocated reflects the number of pieces of the article in stock, and the order of further pieces of the article which could not be allocated is subjected to cancel processing.

In Fig. 1, plural terminal computers 11 (only one computer is shown in Fig. 1) are connected to a server computer 21 of the retail shop 20 through a line 40 such as a telephone line or the like. The line 40 can perform electronic data transmission using the Internet through a commercial provider (not shown) or the like., The server computer 21 is connected to a server computer 31 of the wholesale house 30 through a line 41. The line 41 is a public network, a special-purpose line or the like through which electronic data can be transmitted.

The terminal computer 11 has at least a Web browser functional portion 111 and an input processor 112.

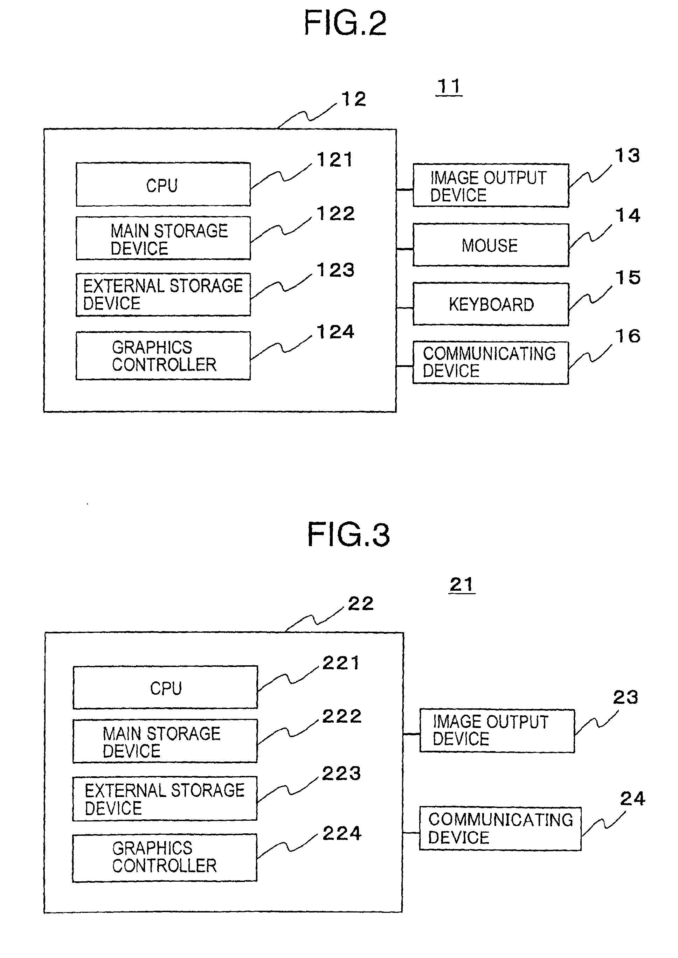

The browser functional portion 111 carries out the processing of interpreting the content of a Web-page creating file received from the server computer 21 and displaying the content thus interpreted on an image output device 13 (see Fig. 2), and the processing of transmitting a file request, data, etc. inputted through the Web page to the server computer 21 according to an instruction of the user 10.

The input processor 112 carries out the processing of accepting the instruction of the user 10. Specifically, it carries out the input processing from a mouse 14, a keyboard 15.

Here, the processing of displaying the Web page supplied from the server computer 21 onto the image output device 13 by the browser functional portion 111 will be described. In an external storage device 223 of the server computer 21 stored are a text file described in a language called as HTML (Hypertext Markup Language) as well as an image file, an audio file, a video file, etc. for creating Web pages. Further, an address based on a notation called as URL (Uniform Resource Locator) is uniquely affixed to each Web page to identify each Web page on the Internet.

When the user 10 indicates URL of a desired Web page to be browsed on the Browser, the browser functional portion 111 requests the server computer 21 to read out a file for creating the Web page indicated by the user 10. In response to this request, a Web front portion 211 of the server computer 21 reads out the requested file from the external storage device 223 and transmits it to the browser functional portion 111 by using a communication protocol called as HTTP (Hypertext Transfer Protocol).

The browser functional portion 111 has means for interpreting a text file described in HTML, etc. contained in the file thus received, and displays the Web page on the image output device 13 according to the contents of the text file, etc.

Fig. 2 is a block diagram showing a hardware construction of the terminal computer 11. The terminal computer 11 has a housing 12, an image output device 13, a mouse 14, a keyboard 15 and a communication device 16. The user 10 can click predetermined buttons on the Web page by the mouse 14 and input data into a predetermined column by the keyboard 15. The communication device 16 may comprise a modem, TA (terminal adapter) or the like. The terminal computer 11 is connected to the line 40 such as a telephone line or the like through the communication device 16. The user 10 can use the Internet through a commercial provider or the like by using the terminal computer 11.

In the housing 12 are provided a central processing unit (CPU) 121, a main storage device 122, an external storage device 123, a graphics controller 124, etc. The external storage device 123 comprises a hard disc device, for example. An OS (operating system), programs such as browser, etc. are stored in the hard disc device. The OS is a basic software program for controlling the terminal computer 11. The browser is a program used to interpret a file described in HTML, create a Web page and display the Web page on the image processor 13, etc. These programs are loaded to the main storage device 122, and executed by the CPU 121, thereby implementing the respective functions. The terminal computer 11 is not limited to the above hardware construction.

The server computer 21 of the retail shop 20 constitutes a retail shop sales managing system 210. The retail shop sales managing system 210 has a Web front portion 211, an stock number managing portion 212, an allocating portion 213 and a communicating portion 214, and also manages these functional portions. These functional portions may be dispersed into plural computers.

In response to a transmission request of a file (Web page file) for creating a Web page from the terminal computer 11, the Web front portion 211 carries out the processing of transmitting the corresponding Web page file to the terminal computer 11 through the line 40, makes management such as renewal of the Web page file, etc., and carries out the processing of obtaining order information, etc. from the user 10 through the Web page.

The stock number managing portion 212 holds the information on the number of pieces of each article (goods) which are owned and laid in stock by the retail shop 20 (hereinafter referred to as "the retail stock number"), the number of pieces of each article (goods) which are owned and laid in stock by the wholesale house 30 (hereinafter referred to as "wholesale stock number"), and a ratio value, and also holds the information of a virtual stock number calculated on the basis of the retail stock numbers and wholesale stock numbers and the ratio value.

Here, the ratio value represents the distribution factor (ratio) of the wholesale stock number to the retail shop 20. This value is set on the basis of the ratio of the selling number of pieces of each article at the retail shop side to the selling number of pieces of the article at the wholesale house side or the ratio of the sales of the retail shop side to the sales of the wholesale house side. For example, assuming that the retail and wholesale stock numbers on a certain article are equal to 100 and 500 respectively, and the ratio value is equal to 30%, the virtual stock number is equal to 250 (= 100 + 500 x 30%).

The allocating portion 213 manages an accepted order list and also carries out the allocation of the retail stock on the basis of the accepted order list. The accepted order list will be described later. The communicating portion 214 manages the communication of the data on the stock number of pieces of each article owned by the wholesale house 30, data on the orders of articles, etc. with the server computer 31 of the wholesale house 30.

Here, the processing of obtaining the information on the user 10 from the Web page through the Web front portion 211 by the retail shop sales managing system 210 will be described. In a text file described in HTML may be installed commands for executing the processing when a predetermined position (button) on the Web page is clicked by the mouse 14, for example, displaying another Web page, transmitting the information input, etc. In order for the retail shop 20 to obtain the information on the user 10 who reads the Web page supplied by the retail shop 20, for example, article ordering information, an electronic mail address, etc., not only a column on which the user 20 is made to write necessary information in advance or necessary information can be indicated in advance, but also a button by which a command for transmitting the above information can be achieved are disposed on the Web display frame. When the user 10 clicks the check box of the article ordering information and inputs his/her electronic mail address on the electronic mail address input column by using the input device such as the mouse 14, the keyboard 15 or the like, and then clicks a transmission button, the above information is transmitted to the server computer 21 in the form of a file or the like. The retail shop sales managing system 210 receives these files or the like and obtains the information from the user 10.

Fig. 3 is a block diagram showing the hardware construction of the server computer 21. The server computer 21 has a housing 22, an image output device 23 and a communicating device 24. The server computer 21 is connected to the line 40 and the line 41 through the communicating device 24.

In the housing 22 provided are a central processing device (CPU) 221, a main storage device 222, an external storage device 223, a graphics controller 224, etc. The external storage device 223 is provided with a data area in which the retail stock number of pieces of each article (i.e., the number of each article in stock) owned by the retail shop 20, the wholesale stock number of pieces of each article (i.e., the number of each article in stock) owned by the wholesale house 30, the ratio value, the virtual stock number, etc. are stored. However, the server computer 21 is not limited to the above hardware construction.

The server computer 31 of the wholesale house 30 constitutes the wholesale stock managing system 310. The wholesale stock managing system 310 has an stock number managing portion 311 and a communicating portion 312, and manages these functional portions. The stock number managing portion 311 holds the number of pieces of each article which are owned and laid in stock by the wholesale house 30 (i.e., the stock number of each article) . The communicating portion 312 manages the transmission/reception of data on the stock number of each article and the order of each article, etc. to/from the server computer 21 of the retail shop 20.

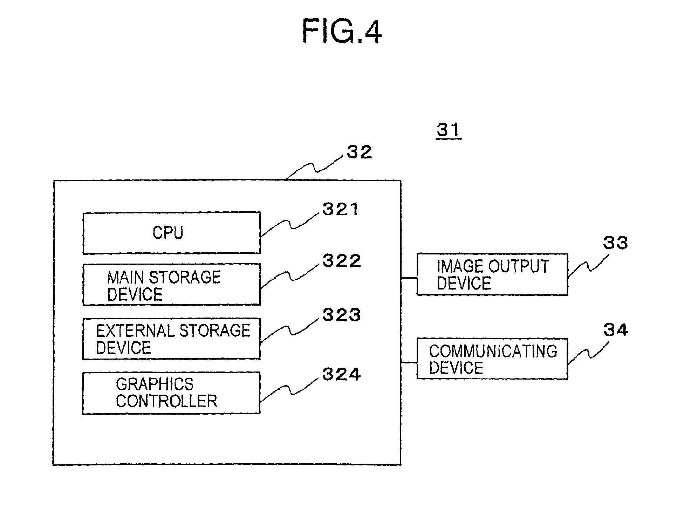

Fig. 4 is a block diagram showing the hardware construction of the server computer 31 of the wholesale house 30. The server computer 31 has a housing 32, an image output device 33 and a communicating device 34. The server computer 31 is connected to the line 41 through the communicating device 34.

In the housing 32 are provided a central processing unit (CPU) 321, a main storage device 322, an external storage device 323, a graphics controller 324, etc. However, the server computer 31 is not limited to the above hardware construction.

Next, the Web page of on-line shopping supplied by the retail shop 20 will be described.

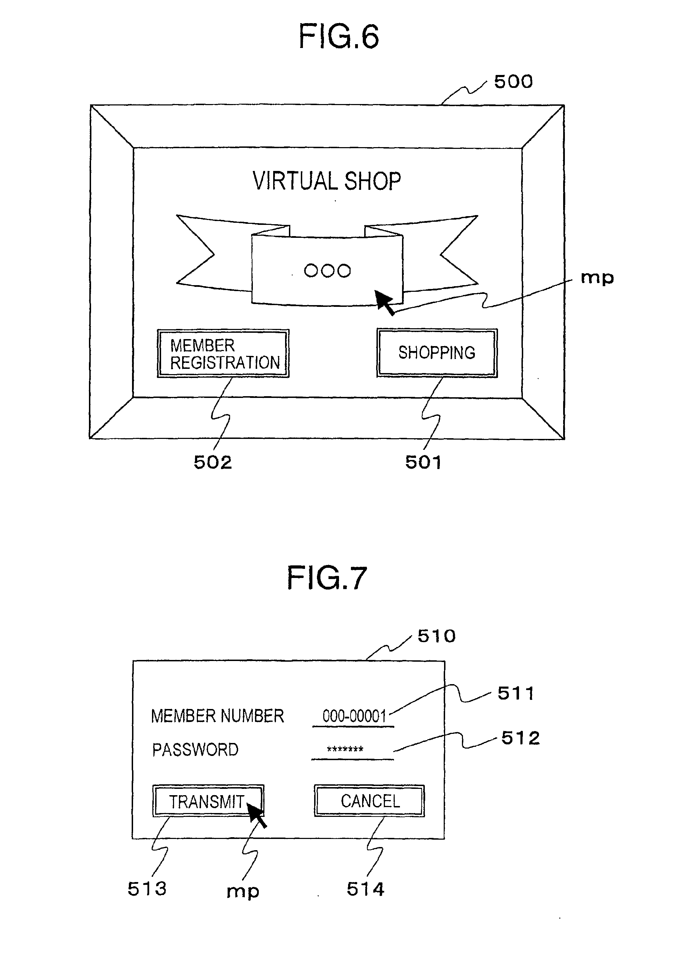

Fig. 6 shows an example of a home page 500 representing the entrance of a virtual shop. When the user 10 uses the on-line shop supplied by the retail shop 20, this page is first displayed. On the home page 500 are arranged a shopping button 501 to shift the display page to a page on which member authentication is carried out prior to shopping, and a member registering button 502 to shift the display page to a page on which an unregistered user carries out member registration. Control commands are installed in these buttons in advance, and the mouse 14 is clicked while the mouse pointer mp is located on the button, and then the corresponding control command is executed. The control commands are relating to the shift to another page, the transmission of input data, etc.

Fig. 7 shows an example of a member authentication page 510 to carry out member authentication. On the member authentication page 510 are arranged a member number inputting column 511, a password inputting column 512, a transmission button 513 for transmitting the above data and requesting authentication, and a cancel button 514 for finishing this page without carrying out the member authentication.

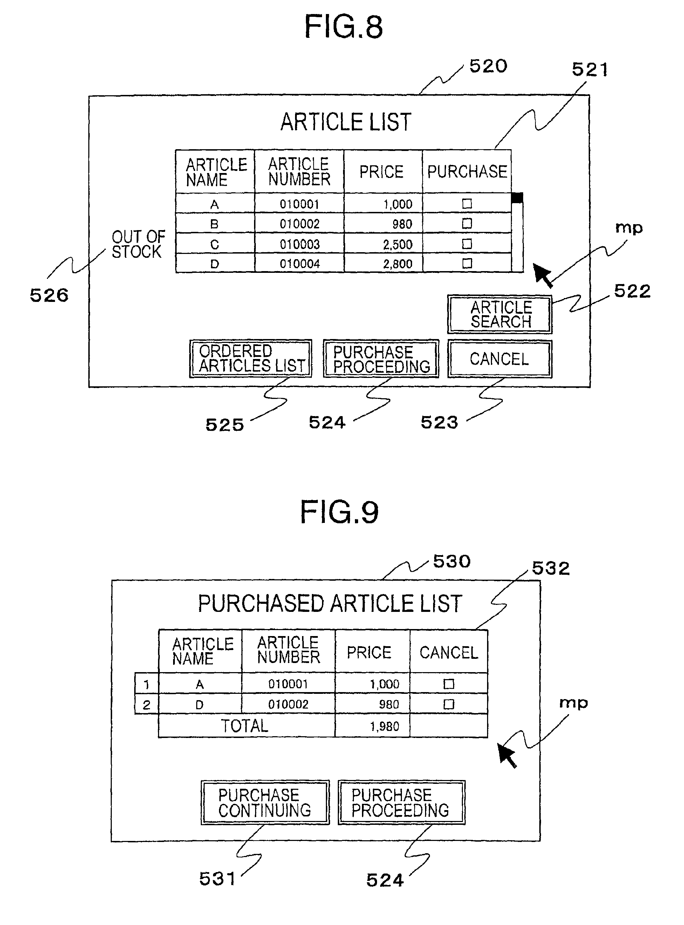

Fig. 8 shows an example of an article (goods) list page 520 on which article groups dealt by the retail shop 20 are listed. On the article list page 520 are arranged a list portion 521 indicating a list of articles, an articles searching button 522 to shift the list page to an article searching page, a purchased article list button 525 to shift the list page to a purchased article list page, a purchase proceeding button 524 to shift the list page to a purchase proceeding page, and a cancel button 523 for finishing this page.

Fig. 9 shows an example of the purchased article list page 530 on which a list of articles (goods) indicated to be purchased is displayed. On the purchased article list page 530 are arranged a list 532 of purchase-indicated articles (goods), a purchase continuing button 531 to shift the list page to the article list page 520 and continue to purchase, and a purchase proceeding button 524 to shift the list page to the purchase proceeding page.

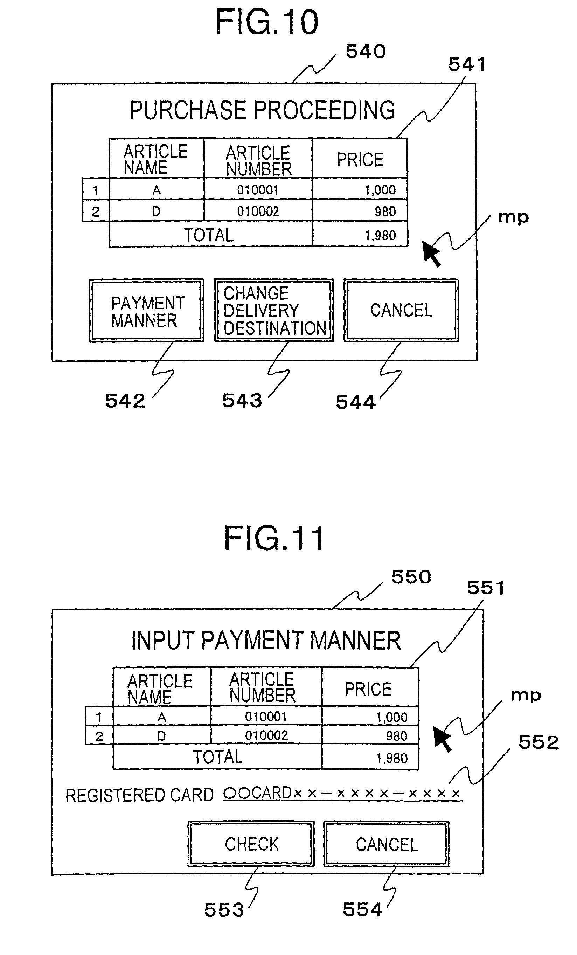

Fig. 10 shows an example of the purchase proceeding page 540 for indicating the purchase proceeding. On the purchase proceeding page 540 are arranged a list 541 of purchase-indicated articles, a payment manner button 542 to shift the purchase proceeding page to a page on which a payment manner is indicated, a delivery destination changing button 543 to shift the purchase proceeding page to a page for instructing a change of a delivery address other than a registered address, and a cancel button 544 for interrupting the purchase proceeding.

Fig. 11 shows an example of a payment manner input page 550 for indicating the payment manner. On the payment manner input page 550 are arranged a list 551 of purchase-indicated articles, a column 552 on which a credit card number registered is displayed, a check button 553 for ascertaining the user's intention of the purchase, and a cancel button 554 for interrupting the purchase. When the user 10 wants to use a credit card other than the registered credit card, the content of the column 552 may be changed.

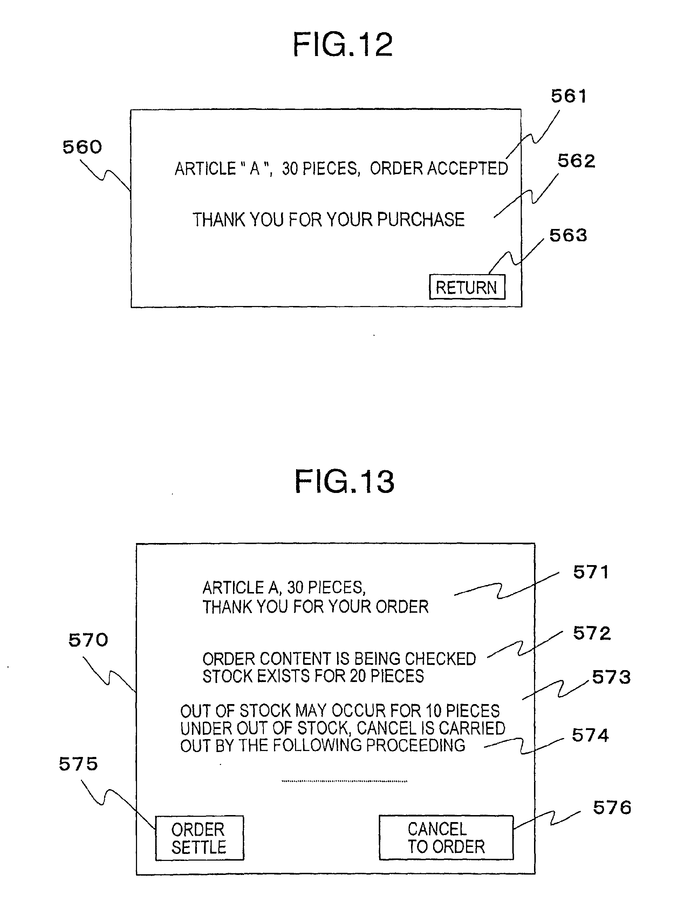

Fig. 12 shows an example of a page 560 when the order number of pieces of some article which the user 10 wants to purchase is equal to or less than the virtual stock number. On this page 560 are arranged a column 561 for displaying the order number accepted, a column 562 for displaying a message expressing gratitude to the purchase, and a button 563 for finishing this page.

Fig. 13 shows an example of a page 570 displayed when the order number of pieces of some article which the user 10 wants to purchase is more than the virtual stock number, but is not more than the total value of the retail stock number and the wholesale stock number. On this page 570 are arranged a column 571 for displaying the order number accepted, a column 572 for displaying the number of pieces of the article in consideration of existence of the virtual stock, a column 573 for displaying that an excessive order number of pieces of the article over the virtual stock may be cancelled, a column 574 for displaying the proceeding when the cancel is made, an order settling button 575 for settling the order on the basis of the displayed content, and an order cancel button 576 for canceling the order.

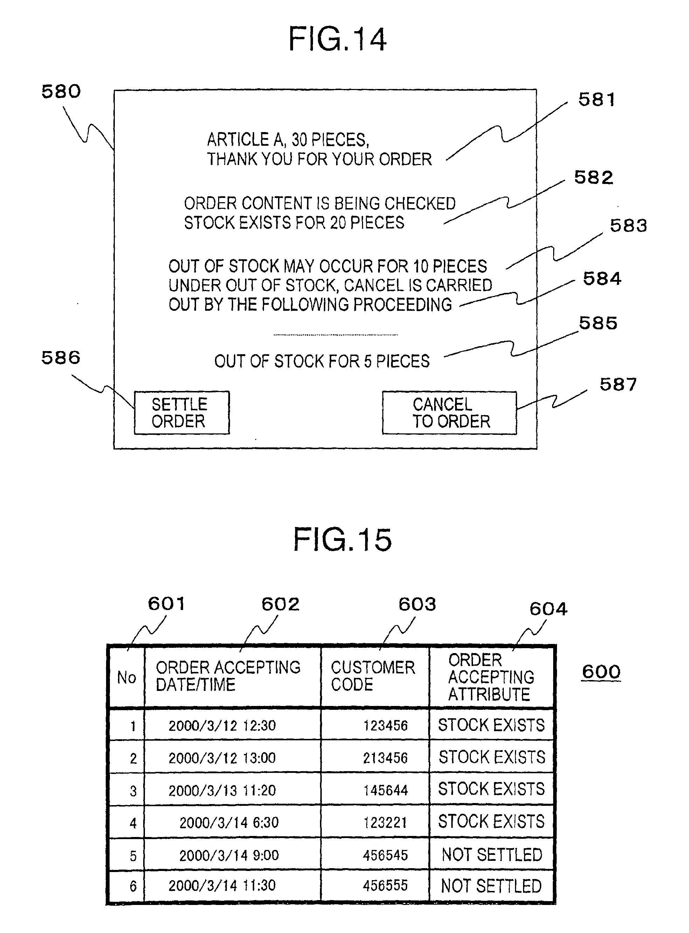

Fig. 14 shows an example of a page 580 displayed when the order number of pieces of some article which the user 10 wants to purchase is more than the total value of the retail stock number and the wholesale stock number. On this page 580 are arranged a column 581 for displaying the order number accepted, a column 582 for displaying the number of pieces of the article in consideration of existence of the virtual stock, a column 583 for displaying that an excessive order number of pieces of the article over the virtual stock maybe cancelled, a column 584 for displaying the proceeding when the cancel is made, a column 585 for displaying that an excessive order number of pieces of the article over the total of the retail stock and the wholesale stock runs out of stock, an order settling button 586 for settling the order on the basis of the displayed content, and an order cancel button 587 for canceling the order.

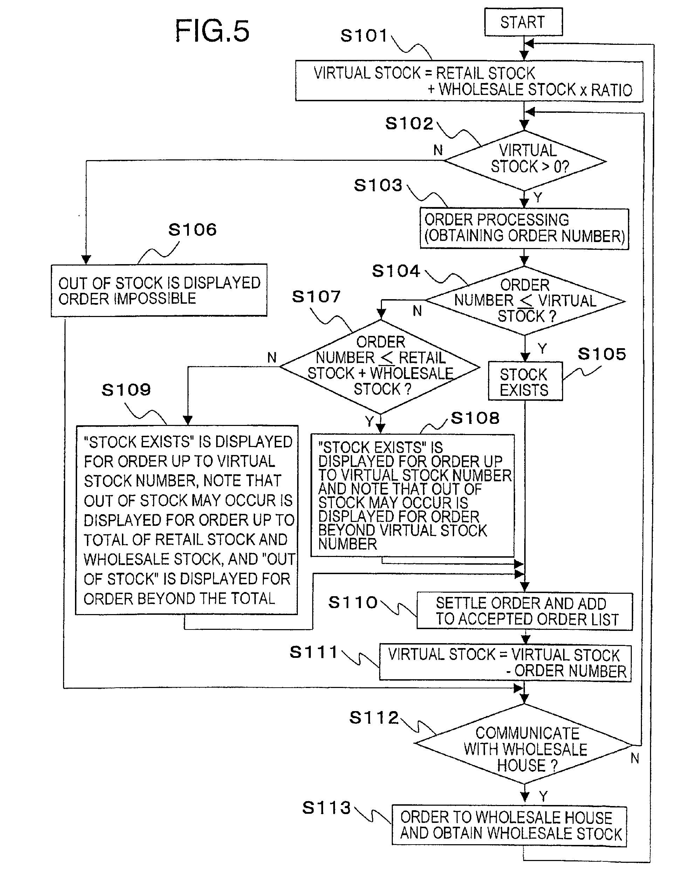

Next, the stock management according to the first embodiment of the present invention will be described with reference to the flowchart of Fig. 5.

The retail shop sales managing system 210 holds the retail stock number, the wholesale stock number and the ratio value every dealt-in article in the stock number managing portion 212. The retail stock number is renewed by the following allocation processing when the stock number of the retail shop is changed. The wholesale stock number is renewed on the basis of the latest value of the wholesale stock number obtained when the retail shop sales managing system 210 receives/delivers data from/to the wholesale stock managing system 310 (S113). The ratio value is renewed in accordance with the share of the retail shop 20 to the wholesale house 30. The retail shop sales managing system 210 can obtain the share value from the wholesale stock managing system 310 every predetermined time interval or on a real-time basis, and holds the ratio corresponding to this value in the stock number managing portion 212. Further, any ratio value can be manually set. The retail stock number and the wholesale stock number may be manually set.

The stock number managing portion 212 sums the retail stock number and a product obtained by multiplying the wholesale stock number by the ratio value, and holds it as the virtual stock number (S101).

When the virtual stock number is equal to zero, "out of stock" is displayed on the Web page as indicated by reference numeral 526 of Fig.8 to indicate that the article runs out of stock and the order of the article is not acceptable (S106). In this case, the appearance of the article is omitted from the Web page, or the article appears in the Web page to accept reservation.

When the virtual stock number is above 1, the order on the Web page is allowed (S103).

Here, the processing when the user 10 orders an article on the Web page supplied from the retail shop 20 will be described.

The retail shop 20 supplies a Web page 500 as shown in Fig. 6 on the Internet. Therefore, the user 10 can display the Web page 500 on the image display device 13 by using the Web browser functional portion 111 to browse the Web page 500. In the Web page 500 being browsed, the shopping button 501 includes a command to display a Web page 510 for authenticating whether the user 10 is a member or not as shown in Fig. 7 when the button 501 is clicked. When the user 10 locates the mouse pointer mp on the shopping button 501 and clicks the mouse 14, the above command is executed and the Web page 510 for the member authentication as shown in Fig. 7 is displayed on the image output device 13.

Through the keyboard 15, the user 10 inputs the member number into a member number column 511 and also a password into a password column 512, and when the transmission button 513 is clicked, the information of the member number and the password is transmitted to the server computer 21. The Web front system 211 receives this information, and authenticates whether the user is a member or not. After the authentication, the user 10 can browse a group of articles appearing in an article list 521 on an article list page 520 as shown in Fig. 8. When the article searching button 522 is clicked, a desired article can be searched. Here, with respect to an article whose virtual stock number is equal to zero, the information 526 indicating that this article runs out of stock is displayed as described above.

If there is any article which the user 10 wants to purchase, the user 10 indicates (specifies) the article number by using the input device such as the mouse 14 or the like. The user 10 also can indicate the purchase of plural articles. Further, the user can properly check the list 531 of the indicated articles on the purchase-indicated article list page 530 as shown in Fig. 9 which is displayedby clicking the button 524.

After the indication of articles which the user wants to purchase is completed, the user 10 may click the purchase proceeding button 524 to display the purchase proceeding page 540 as shown in Fig. 10. The user 10 who checks the purchased articles may click the payment manner input button 542 to display the payment manner input page 550 as shown in Fig. 11. A using credit card number 552 which has been registered in advance when the member registration has been carried out is displayed on the payment manner input page 550, and the user 10 may click the check button 553 of the order content if no change is necessary.

When the check button 553 of the order content is clicked, the data on the article name (article number) of an article indicated and the number of pieces of the ordered article (order number) are transmitted to the retail shop sales managing system 210.

As described above, the retail shop sales managing system 210 after receiving the data of the article name and the order number, transmitted by the proceedings of user 10, compares the order number with the virtual stock number (S104).

When the order number is not more than the virtual stock number, the retail shop sales managing system 210 displays an order accept display frame 560 as shown in Fig. 12 (S105), and the order is settled.

If the order number is more than the virtual stock number, the order number is compared with the total value of the retail stock number and the wholesale stock number (total stock number) (S107).

In the retail shop sales managing system 210, if the order number is not more than the total stock number, an order-accepting display frame is displayed which contains a message indicating that an excessive order number of pieces of the ordered article over the virtual stock number may run out of stock and also indicating the cancel method when the out of stock occurs (S108). For example, when the total stock number is equal to 100, the virtual stock number is equal to 20 and the order number is equal to 30, 20 pieces (reference numeral 572) are indicated as being in stock and 10 pieces (reference numeral 573) are indicated as being potentially cancelled as shown in Fig. 13. At the same time, the information 574 on the cancel method is displayed. When the user 10 wants to order along the displayed content, the user 10 may click the order settling button 575. Further, when the user does not want to order, the user may click the button 576.

If the order number is more than the total stock number, the retail shop sales managing system 210 displays an order-accepting display frame which contains a message indicating that an excessive order number of pieces of the ordered article which is over the virtual stock number, but is not more than the total stock number may run out of stock and also indicating the cancel method when the user cancels the order, and further a message indicating that an excessive order number of pieces of the article over the total stock number runs out of stock (S109). For example, when the total stock number is equal to 30, the virtual stock number is equal to 20 and the order number is equal to 35, 20 pieces (reference numeral 582) are indicated as being in stock and 10 pieces (reference numeral 583) are indicated as being potentially cancelled as shown in Fig. 14. At the same time, the information 584 on the cancel method is displayed, and 5 pieces (reference numeral 585) are indicated as running out of stock. When the user 10 wants to order along the displayed content, the user 10 may click the order settling button 586. When the user 10 does not want to order, the user 10 may click the button 587.

The order processing (S103) may be carried out with omitting the check processing of presence or absence of the virtual stock of S102, thereby displaying the out of stock in the processing of S109 for the first time.

When the order from the user 10 is settled through the above processing, the retail shop sales managing system 210 adds order-accepting data to the accepted order list by the allocating portion 213 (S110).

Here, the accepted order list will be described with reference to Fig. 15, which conceptually shows the structure of the accepted order list. As shown in Fig. 15, the accepted order list 600 is designed to have an accept number 601, an accept date 602, a customer code 603 and an order-accepting attribute 604. The accepted order list 600 is managed every article. Even when plural orders are simultaneously accepted for the same article, the order is developed piece by piece, and added as order-accepted data to the list. In the accepted order list 600, the accept number 601 is a serial number of accepting the order. The order-accepted date 602 is a date/time when the order is accepted. The customer code 603 is a member number to identify a person who orders (order source). The order-accepted attribute 604 has two states of "stock existing" and "non-settled". The "stock existing" state is for order-accepted data of an article for which the virtual stock exists (S105) when the order is accepted and thus the order of the article has been settled. The "non-settled" state is for order-accepted data of an article for which no virtual stock exists or the order number is over the virtual stock number (S108) when the order is accepted, and thus the excessive order number of pieces of the article may be canceled.

By adding the order-accepted data to the accepted order list, the stock number managing portion 212 subtracts the order number from the virtual stock number and sets the subtraction result as the new virtual stock number (S111).

The retail shop managing system 210 communicates with the wholesale stock managing system 310 at regular intervals or at irregular intervals to perform data communication therebetween (S112). The retail shop managing system 210 repeats the ordering processing on the basis of the virtual stock number renewed through the processing of S111 at the timing other than the communication timing between the retail shop managing system 210 and the wholesale stock managing system 310 (S102).

At the communication timing between the retail shop managing system 210 and the wholesale stock managing system 310, the retail shop managing system 210 transmits order accepting information on the wholesale house allocation amount (allocation processing will be described later), and receives the wholesale stock number. The retail shop sales managing system 210 sets the new virtual stock number on the basis of the wholesale stock number received and the retail stock number (S101), and repeats the processing (S102 and subsequent steps).

Here, any timing may be set to the communication timing between the retail shop managing system 210 and the wholesale stock managing system 310. For example, it may be carried out periodically at several times per day, every time the retail shop accepts an order, every time the stock number of the wholesale house 30 is varied, or the like. On the basis of a report from the wholesale house 30, the data or the like may be inputted manually.

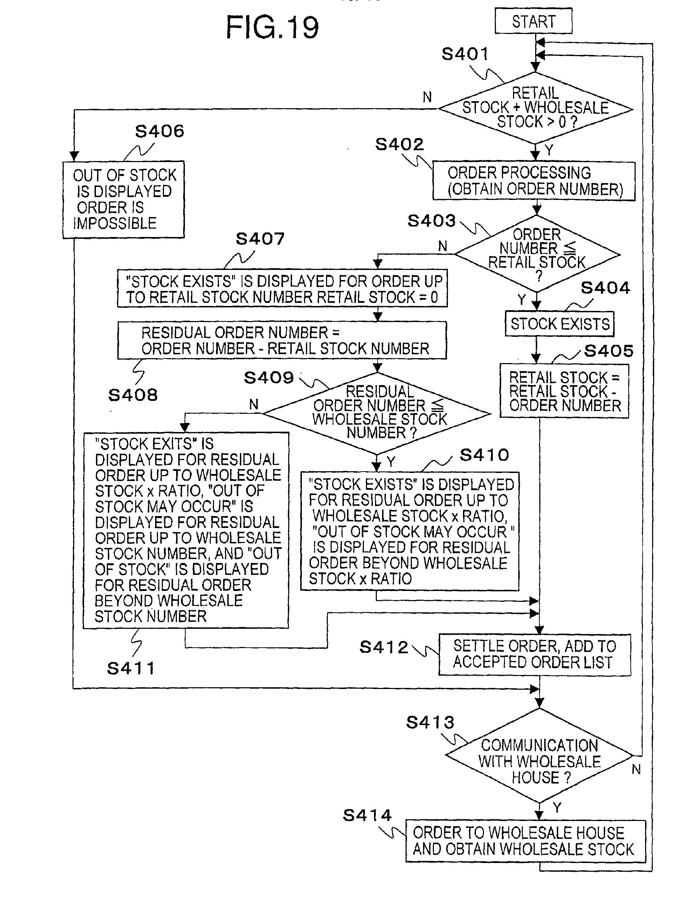

As a modification of the above embodiment, the following processing may be carried out. In this case, first the stock is checked on the basis of the retail stock number, and if the retail stock number cannot cover the order number, the processing of checking the wholesale stock number is carried out. This processing will be described with reference to the flowchart of Fig. 19.

As in the case of the above embodiment, in the retail shop sales managing system 210, the stock number managing portion 212 holds the retail stock number, the wholesale stock number and the ratio value every dealt-in article. The retail shop sales managing system 210 displays "out of stock" on the Web page to indicate that the ordered article runs out of stock if both of the retail stock number and the wholesale stock number are equal to zero, and rejects to accept any order of the article concerned (S405).

If the total value of the retail stock number and the wholesale stock number is equal to one or more, the order is allowed on the Web page (S402).

The retail shop sales managing system 210 which receives the data of the article name and the order number transmitted through the proceeding of the user 10 compares the order number with the retail stock number (S403).

When the order number is not more than the retail stock number, it is judged that there is any article in stock (S404), and the value obtained by subtracting the order number from the retail stock number is set as a new retail stock number (S405).

If the order number of pieces of an ordered article is larger than the retail stock number, the order of pieces (of the ordered article) whose number is equal to the retail stock number is first accepted and then the retail stock number is set to zero (S407). Subsequently, the order-accepted number corresponding to the retail stock number is subtracted from the order number, and this value is set as a residual order number (S408). Here, the residual (excessive) order number corresponds to the number of residual (excessive) pieces (of the ordered article) which are expected to be allocated to the user by using the pieces of the ordered article stocked in the wholesale house.

Subsequently, the residual order number and the wholesale stock number are compared with each other (S409).

If the residual order number is not more than the wholesale stock number, with respect to the residual order number of residual pieces (of the ordered article) up to the multiplication of the wholesale stock number and the ratio value, the order of the pieces is accepted and settled because it is judged that they are in stock. With respect to an excessive order number of residual pieces over the multiplication value of the wholesale stock number and the ratio value, an order-accepted display frame containing a message indicating that they will run out of stock and also indicating the cancel method when they run out of stock is displayed (S410).

When the residual order number is larger than the wholesale stock number, with respect to an excessive order number of residual pieces up to the multiplication of the wholesale stock number and the ratio value, the order thereof is settled because it is judged that they are in stock. With respect to an excessive order number of residual pieces which is over the multiplication of the wholesale stock number and the ratio value, but is not more than the wholesale stock number, there is displayed an order-accepted display frame which contains a message indicating that the residual pieces may run out of stock and also indicating the cancel method when they run out of stock, and also a message indicating that with respect to a further excessive order number of residual pieces over the wholesale stock number, they are out of stock (S411).

The following proceedings are carried out in the same manner as described above.

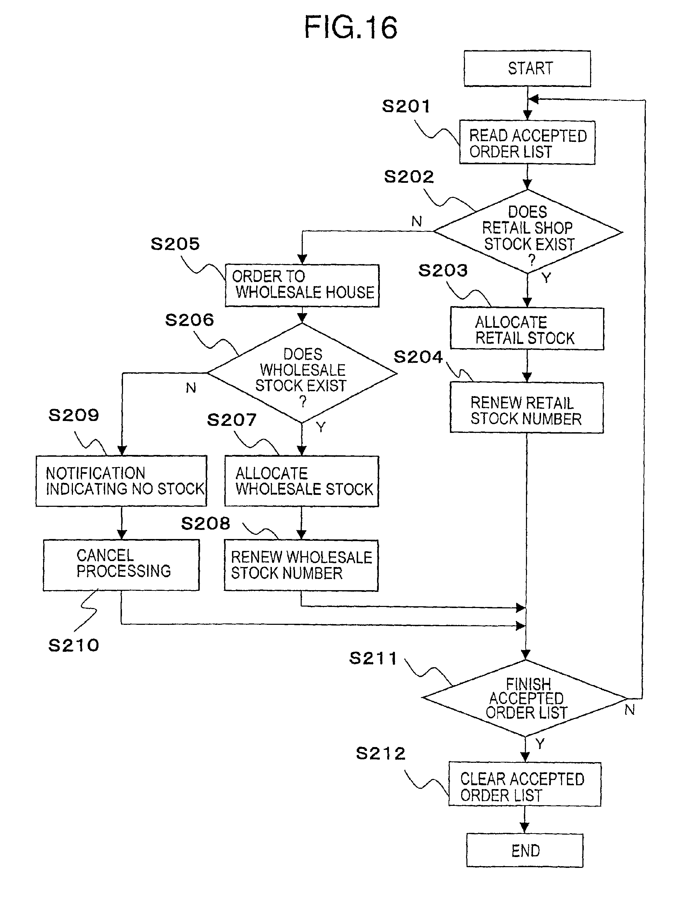

Next, the allocation processing will be described with reference to the flowchart of Fig. 16. The allocation processing is periodically or non-periodically carried out separately from the ordering processing.

The allocating portion 213 reads in the first data of the accepted order list (S201). If there is any retail stock, which can be allocated in response to the accepted order, the retail stock is allocated (S203) and the shipping proceeding is carried out. The number of pieces thus allocated is subtracted from the retail stock number to renew the retail stock number (S204). If there is no retail stock, the ordering processing to the wholesale house is carried out through the communicating portion 214 (S205).

The wholesale stock system 310 accepting the order allocates the wholesale stock if there is any stock which can be allocated to the order from the retail shop sales managing system 210 (S207), and carries out the shipping proceeding. The number of pieces thus allocated is subtracted from the wholesale stock number and the wholesale stock number is renewed (S208). If there is no stock, the retail shop sales managing system 210 is notified that there is no stock (S209).

The retail shop sales managing system 210 which accepts the notification indicating no stock from the wholesale stock system 310 carries out predetermined cancel processing (S210).

Here, the cancel processing will be described. There are two types of targets to which cancel occurs. The first cancel target is an article for which a stock is confirmed when it is ordered. That is, it is the article corresponding to the order-accepted data whose order-accepted attribute is the "stock existing" state. This occurs when the allocation cannot be performed due to renewal of the stock data, the timing lag of the allocation of another retail shop or the like although there is any virtual stock at the ordering time. The second cancel target is an article which is expected to run out of stock when it is ordered. That is, it is the article corresponding to the order-accepted data whose order-accepted attribute is the "non-settled" state.

In the case of the second cancel target, the cancel processing is carried out along the cancel method which was notified to the user 10 in advance, and the cancel is reported to the user 10.

In the case of the first cancel target, the cancel method is explained to the user 10 and the cancel processing is carried out, thereafter reporting the cancel to the user 10.

The above processing is repeated every order-accepted data (S211), and after all the order-accepted data registered in the accepted order list have been processed, the accepted order list is cleared (S212) and the allocation processing is finished.

In the above case, the wholesale stock is allocated if no retail stock exists. However, it may be adopted to first allocate the wholesale stock and then allocate the retail stock if no wholesale stock exists.

Next, a second embodiment according to the present invention will be described. In this embodiment, the concept of the virtual stock is not used, and the other points containing the functional construction are the same as the first embodiment. Therefore, only the different point from the first embodiment will be described.

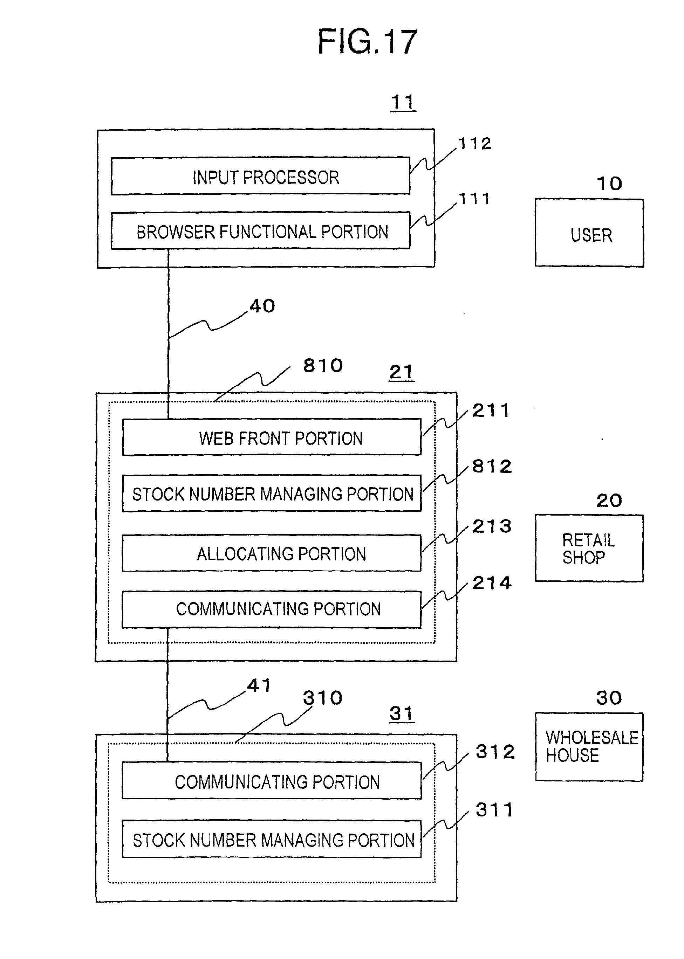

Fig. 17 is a diagram showing the construction of a network to which the sales managing system of the second embodiment of the present invention is applied. The terminal computer 11 of the user 10 is also the same as the first embodiment.

The server computer 21 of the retail shop 20 constitutes the retail shop sales managing system 810. The retail shop sales managing system 810 has a Web front portion 211, a stock number managing portion 212, an allocating portion 213 and a communicating portion 214, and manages these functional portions. These functional portions may be dispersed into plural computers.

The stock number managing portion 812 holds the stock number of articles (retail stock number) owned by the retail shop 20. The retail shop stock number is renewed when the stock number of the retail shop is varied due to the allocation processing. The other functional portions are the same as the first embodiment.

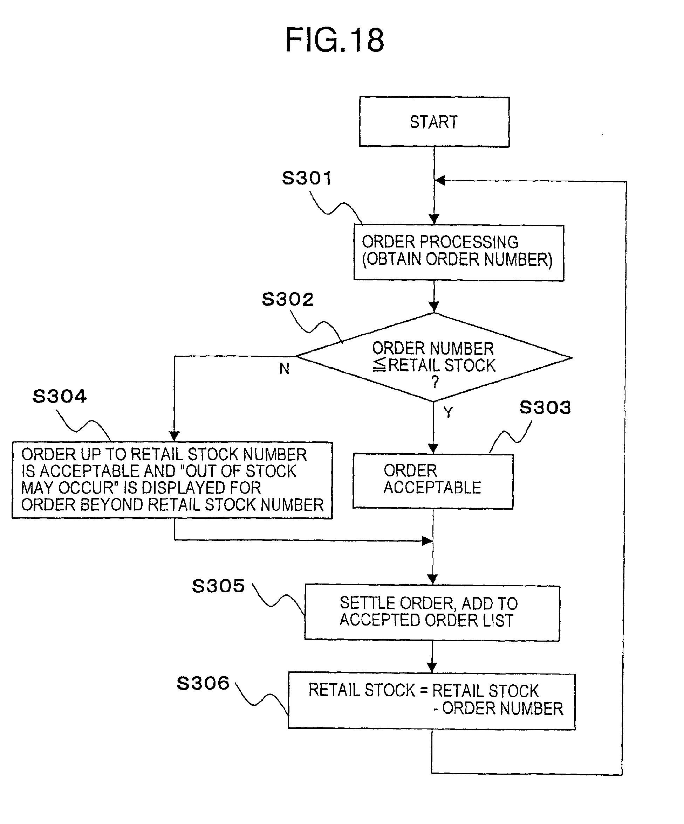

Next, the stock management of the second embodiment of the present invention will be described with reference to the flowchart of Fig. 18.

Through the same ordering processing as the first embodiment, the retail shop sales managing system 810 receives the data of the article name and the order number transmitted through the proceeding of the user 10 (S301), and subsequently compares the order number with the retail shop stock number (S302).

If the order number is not more than the retail shop stock number, the order-accepted display frame 560 as shown in Fig. 12 is displayed (S303) and the order is settled.

If the order number is larger than the retail shop stock number, with respect to an excess of pieces (of the ordered article) over the retail shop stock number, there is displayed an order-accepted display frame containing a message indicating that these residual pieces may be out of stock and also indicating a cancel method when they run out of stock (S304). For example, when the retail stock number is equal to 20 and the order number is equal to 30, 20 pieces (reference numeral 572) are indicated as existing as pieces in stock and 10 pieces (reference numeral 573) are indicated as being potentially cancelled as shown in Fig. 13. In addition, information 574 on the cancel method is also displayed. When the user 10 wants to order along the display content, the user 10 may click the order settling button 575. When the user 10 does not want to order, the user 10 may click the button 576.

When the order is settled by the operation of the user 10, the retail shop sales managing system 810 adds the order-accepted data to the accepted order list (S305). The order number thus settled is subtracted from the retail stock number and the subtraction result is set as a new retail stock number (S306), and then the ordering processing is repeated.

The allocation processing is also the same as the first embodiment. According to the second embodiment, the ordering processing can be carried out even when the information on the wholesale stock number is not obtained. Therefore, the second embodiment is preferably applied to a case where it is guaranteed that the wholesale house 30 has a sufficient stock of articles or the article dealings are not relatively frequently carried out.

As described above, according to the present invention, the stock risk of the retail shop can be reduced, and the loss of the sales opportunities due to the out of stock can be reduced.

## Claims

1. A sales managing method for a seller who accepts an on-line order from a terminal of a purchaser comprising the steps of:
obtaining the number of articles in stock which are owned by an article supply source for supplying the articles to the seller; and
determining the stock number situation of articles calculated on the basis of the stock number of articles owned by the seller and the stock number of articles owned by the article supply source,
wherein when an order request containing information to specify an article and the number of the ordered articles is accepted from the terminal of the purchaser, the information based on the order number of the article thus specified and the stock number situation of the articles thus specified is displayed on the terminal of the purchaser.

2. A sales managing system for a seller which accepts an on-line order from a terminal of a purchaser, comprising the steps of:
obtaining the number of articles in stock which are owned by an article supply source for supplying the articles to the seller; and
determining the stock number situation of articles calculated on the basis of the stock number of articles owned by the seller and the stock number of articles owned by the article supply source,
wherein the stock number situation is regarded as being allocatable stock by the seller, and order accepting processing is carried out.

3. The sales managing method as claimed in claim 1 or 2,
wherein the stock number situation is equal to the total number of the stock number of the article owned by the seller and the number corresponding to the ratio of the number of articles allocated to the seller to the number of articles owned by the article supply.

4. The sales managing method as claimed in claim 1,
wherein the information corresponding to the order content and the stock number situation indicates any one of "the article is in stock", "the article may run out of stock" and "the article is out of stock".

5. A sales managing method for a seller which accepts an on-line order from a terminal of a purchaser comprising the steps of:
obtaining a stock number situation calculated on the basis of an article stock number owned by the seller; and
when an order request containing information to specify an article and an order number is accepted from the terminal of the purchase, displaying on the terminal of the purchaser information corresponding to the order number of the article thus specified and the stock number situation of the article thus specified.

6. The sales managing method as claimed in claim 5,
wherein the information corresponding to the order number of the article and the stock number situation indicates any one of "the article is in stock" and "the article may run out stock".

7. A sales managing method for a seller which accepts an on-line order from a terminal of a purchaser,
wherein article allocating processing to an order accepted on the on-line comprises the steps:
investigating articles in stock owned by the seller, and allocating the articles in stock if the articles can be allocated,
or requesting an allocation to an article supply source for supplying articles to the seller.

8. The sales managing system as claimed in claim 7,
wherein when a notification that it is impossible to allocate the articles is received from the article supply source to which the allocation is requested,
the dealing of the articles concerned with the purchaser is canceled.

9. A sales managing system for accepting an order of articles through a network comprising:
means for storing the stock number of articles owned by a seller and the stock number of articles owned by an article supply source for supplying articles to the seller; and
means for setting a stock number situation based on the stock number of the articles owned by the seller and the stock number of the articles owned by the article supply source,
wherein, when an order request containing information to specify an article and an order number of the article is accepted, the information corresponding to the order number of the article thus specified and the stock number situation of the article thus specified is on-line outputted to an order source on a line.

10. A sales managing system for accepting an order of articles through a network comprising:
means for storing the stock number of articles owned by a seller and the stock number of articles owned by an article supply source for supplying articles to the seller; and
means for setting a stock number situation based on the stock number of the articles owned by the seller and the stock number of the articles owned by the article supply source,
where in the stock number situation is set as stock which can be allocated by the seller, and order accepting processing is carried out.

11. The sales managing system as claimed in any one of claims 9 and 10,
wherein the stock number situation is equal to the total number of the stock number of the article owned by the seller and the number corresponding to the ratio of the number of articles allocated to the seller to the number of articles owned by the article supply.

12. The sales managing system as claimed in claim 9,
wherein the information corresponding to the order content and the stock number situation indicates any one of "the article is in stock", "the article may run out of stock" and "the article is out of stock".

13. A sales managing system for accepting an order of articles through a network, comprising:
means for storing the stock number of articles owned by a seller; and
means for setting a stock number situation based on the stock number of articles owned by the seller, wherein when an order request containing information to specify an article and an order number of the article is accepted, the information corresponding to the order number of the article thus specified and the stock number situation of the article thus specified is on-line-output to an order source.

14. The sales managing system as claimed in claim 13,
wherein the information corresponding to the order number of the articles and the stock number situation indicates anyone of "the article is in stock" and "the article may run out of stock".

15. A sales managing system for accepting an order of articles through a network,
comprising article allocating means for allocating articles to an order accepted,
wherein said article allocating means investigates the stock of articles owned by a seller, and allocates the stock articles if the articles can be allocated or requests allocation of articles to an article supply source for supplying articles to the seller.

16. The sales managing system as claimed in claim 15,
wherein when accepting from the article supply source a notification that it is impossible to allocate the articles,
the dealing of the articles concerned with the order source is canceled.

17. A computer readable recording medium for recording a program for making a computer execute the steps of:
accepting an on-line order from a terminal of an order source;
managing the stock number of articles owned by a seller;
obtaining the number of articles in stock which are owned by an article supply source for supplying the articles to a seller;
determining a stock number situation calculated on the basis of the stock number of articles owned by the seller and the stock number of articles owned by the article supply source; and
when an order request containing information to specify an article and an order number of the article is accepted from the terminal of the order source, displaying the information corresponding to the order number of the article thus specified and the stock number situation of the article thus specified on the terminal of the order source.

18. An article sales system in which plural sellers for dealing specific articles supplied from the same article supply source accept orders of customers on the article on-line,
wherein each of the sellers manages the articles by regarding as a virtual stock number the total of an expected rate of articles to be achievable at the seller side to the stock number of the article supply source, as obtained according to previously defined rules and the stock number of articles owned by the seller itself,
and carries out order-accepting processing on the basis of the virtual stock number.

19. The article sales system as claimed in claim 18,
when it is impossible to allocate the articles to an order which has been subjected to the order accepting processing, the dealings of the articles with the customers are canceled.
